# EUROPEAN PATENT SPECIFICATION

(11) **EP 3 477 867 B1**
(45) Date of publication and mention of the grant of the patent: **30.12.2020**
(21) Application number: 17830430.9
(22) Date of filing: 14.07.2017
(51) Int. Cl.: H04B 1/3816, H04W 88/02

(54) **METHOD, APPARATUS AND SYSTEM FOR IMPLEMENTING VIRTUAL SIM CARD, AND MOBILE TERMINAL**
VERFAHREN, VORRICHTUNG UND SYSTEM ZUR IMPLEMENTIERUNG EINER VIRTUELLEN SIM-KARTE UND MOBILES ENDGERÄT
PROCÉDÉ, APPAREIL ET SYSTÈME POUR METTRE EN OEUVRE UNE CARTE SIM VIRTUELLE, ET TERMINAL MOBILE

(30) Priority: 20.07.2016 CN 201610578529; 20.07.2016 CN 201620772416 U
(43) Date of publication of application: 01.05.2019
(73) Proprietor: GUANGDONG OPPO MOBILE TELECOMMUNICATIONS CORP., LTD., Wusha, Chang'an Dongguan, Guangdong 523860 (CN)
(72) Inventor: ZHOU, Xinquan, Dongguan Guangdong 523860 (CN)
(74) Representative: Manitz Finsterwald Patent- und Rechtsanwaltspartnerschaft mbB
(86) International application number: PCT/CN2017/093046
(87) International publication number: WO 2018/014796

(56) References cited:
- CN-A- 101 222 712
- CN-A- 101 400 180
- CN-A- 102 970 432
- CN-A- 105 554 687
- CN-A- 106 100 660
- CN-U- 201 937 708
- CN-U- 205 883 215
- US-B2- 8 532 706

## Description

### TECHNICAL FIELD

The described embodiments of the present disclosure relate to communication technology, and in particular to a method, apparatus and system for realizing a virtual subscriber identification module (SIM) card, and also to a mobile terminal.

### BACKGROUND

The mobile terminal usually includes a SIM card tray or socket for the installation of a SIM card. The SIM card may be inserted in the SIM card tray, or the SIM card tray may have a cover for fixing the SIM card. For example, a multi-function electronic device may include a card socket for SIM card, and thus the electronic device has to define an installation hole for the card socket, which may influence the structural integrity of the electronic device. A gap may exist at the position of the card socket, which may cause the problem of water leakage and poor structural strength. Furthermore, due to fabrication error during actual production, the card socket for SIM card may have several problems such as metal burr, installation defects and color aberration. The SIM card installed on the SIM card socket or card tray sometimes may not be identified if the clips in the SIM card socket or card tray is in poor contact with the SIM card. CN101222712A provides a mobile terminal supporting a virtual SIM card and a user identity authentication method thereof. Programs and functions realized by the prior real SIM card are realized by a mobile terminal; account information is written into the mobile terminal through a mobile network by means of a password card as well as the local retrofit and the program updating to mobile network equipment; and an account is not activated by selling the real SIM card. CN101222712A realizes that the mobile terminal supporting a virtual SIM card can simply use local mobile networks to communicate by purchasing one password card in other countries or across provinces or municipalities, thereby reducing roaming fees, reducing the consumption of the SIM card, reducing the waste of the resource, and reducing customer complaints brought by the incompatibility of the mobile terminal and the SIM card. CN101222712A provides a convenient, flexible, safe mode of using mobile phones in different places. The mobile terminal supporting the virtual SIM card is advantageous to the realization of new functions of the mobile terminal and the decrease of the design cost, and ensures that the popularization of the new functions gets easier.
CN105554687A relates to a networking working method of intelligent equipment, a device and the intelligent equipment. The method comprises a step of receiving the virtual SIM card information sent by a mobile phone through a short-range wireless network, a step of storing the virtual SIM card information, and a step of connecting a cellular mobile network by using the stored virtual SIM card information. According to the technical scheme, in the condition that the intelligent equipment has no network infrastructure environment (such as outdoor) and is not provided with a real SIM card, the intelligent equipment still can connect the network at any time and any place, thus the intelligent equipment can connect the cellular mobile network without the limit of an environment, the cellular mobile network is used to work, the arrangement of the real SIM card in the intelligent equipment and the arrangement of the hardware facility of installing the real SIM card are not needed, and the internal space and product cost of the intelligent equipment can be saved.

### SUMMARY

The invention is defined by the independent claims.

The implementation of the present disclosure may improve the structural integrity, waterproofness of the mobile terminal, and enhance the SIM card connection.

In an aspect, a mobile terminal is provided. The mobile terminal includes: a main board; and a virtual subscriber identification module (SIM) card chip attached on the main board and electrically connected to the main board without usage of a card socket or a card tray; wherein, the virtual SIM card chip is an integrated circuit chip.

In another aspect, a system with the above mobile terminal is provided. The system further comprises: a card reader coupled with the mobile terminal; and an external SIM card inserted in the card reader and storing SIM card information, wherein the mobile terminal identifies the SIM card information stored in the external SIM card and copies the SIM card information to the virtual SIM card chip.

In another aspect, a method for realizing a virtual SIM card is provided. The method includes: controlling a card reader by a mobile terminal to read SIM card information of an external SIM card, wherein, the mobile terminal comprises a main board and a virtual SIM card chip attached on the main board and electrically connected to the main board without usage of a card socket or a card tray, and the virtual SIM card chip is an integrated circuit chip; copying the SIM card information to the virtual SIM card chip arranged inside the mobile terminal; reading the SIM card information from the virtual SIM card chip and proceeding initialization.

According to the present disclosure, a method, an apparatus and a system for realizing a virtual SIM card, and a mobile terminal may be provided. The implementation of the present disclosure may improve the structural integrity and waterproofness of the mobile terminal, and enhance the SIM card connection.

### BRIEF DESCRIPTION OF THE DRAWINGS

The above and/or additional aspects and advantages of the present disclosure would be apparent and easily understood from the following description of embodiments in conjunction with the accompanying drawings, wherein:
FIG. 1 illustrates a structural diagram of a virtual SIM card chip installed on a main board according to an embodiment of the present disclosure.
FIG. 2 illustrates a schematic diagram of a system for realizing a virtual SIM card according to an embodiment of the present disclosure.
FIG. 3 illustrates a schematic diagram of an apparatus for realizing a virtual SIM card according to an embodiment of the present disclosure.
FIG. 4 illustrates a schematic diagram of multiple data storage modules of a virtual SIM card chip according to an embodiment of the present disclosure.

**Description of reference numbers**

| | | | |
|---|---|---|---|
| 10 | mobile terminal | 20 | card reader |
| 12 | main board | 30 | data cable |
| 14 | virtual SIM card chip | 32 | USB plug |
| 140 | pin | 62 | detection module |
| 40 | information identification module | 64 | first duplication module |
| 50 | initialization module | 66 | indication module |
| 60 | information duplication module | 68 | second duplication module |

### DETAILED DESCRIPTION

The following embodiments of the disclosure will be described in detail, examples of which are shown in the accompanying drawings, in which the same or similar reference numerals have been used throughout to denote the same or similar elements or elements serving the same or similar functions. The embodiments described below with reference to the accompanying drawings are exemplary only, meaning they are intended to be illustrative of rather than limiting the disclosure.

In the specification of the present disclosure, it is to be understood that terms such as "thickness", "upper", "lower", "front", "rear", "left", "right", "vertical", "horizontal", "top", "bottom", "inner", "outer" and "circumference" refer to the orientations and locational relations illustrated in the drawings, and for describing the present disclosure and for describing in a simple manner, and which are not intended to indicate or imply that the apparatus or the elements are disposed to locate at the specific directions or are structured and performed in the specific directions, which could not to be understood as limiting the present disclosure.

In addition, terms such as "first" and "second" are used herein for purposes of description and are not intended to indicate or imply relative importance or significance or to imply the number of indicated technical features. Thus, the feature defined with "first" and "second" may include one or more of such a feature. In the description of the present disclosure, "a plurality of' means two or more than two, unless specified otherwise.

In the present disclosure, unless specified or limited otherwise, terms "mounted", "connected", "coupled", "fixed" and the like are used in a broad sense, and may include, for example, fixed connections, detachable connections, or integral connections; may also be mechanical or electrical connections; may also be direct connections or indirect connections via intervening structures; may also be inner communications of two elements, as can be understood by those skilled in the art depending on specific contexts.

For making the purpose, scheme and advantage of the present disclosure better understood, the present disclosure will be described in detail with reference to the accompanying figures and embodiments.

The present disclosure provides a mobile terminal. The mobile terminal includes a main board and a virtual subscriber identification module (SIM) card chip attached on the main board and electrically connected to the main board.

In one embodiment, the virtual SIM card chip includes a plurality of pins for data transmission. The main board comprises a plurality of pads corresponding to and connected with the plurality of pins.

In one embodiment, the pads include copper.

In one embodiment, solder paste may be pasted on the pads.

The present disclosure also provides a system for realizing a virtual SIM card. The system includes: a mobile terminal comprising a main board and a virtual SIM card chip, wherein the virtual SIM card chip is attached on the main board and electrically connected to the main board; a card reader coupled with the mobile terminal; and an external SIM card inserted in the card reader and storing SIM card information, wherein the mobile terminal identifies the SIM card information stored in the external SIM card and copies the SIM card information to the virtual SIM card chip.

In one embodiment, the virtual SIM card chip comprises a plurality of pins for data transmission; the main board comprises a plurality of pads corresponding to and connected with the plurality of pins.

In one embodiment, the pads include cooper.

In one embodiment, solder paste may be pasted on the pads.

In one embodiment, the system further includes a data cable coupled between the card reader and the mobile terminal.

In one embodiment, the mobile terminal communicates with the card reader with wireless network signals.

In one embodiment, the mobile terminal comprises a universal serial bus (USB) interface; the data cable includes a USB plug which is plugged in the USB interface so as to couple the card reader with the mobile terminal.

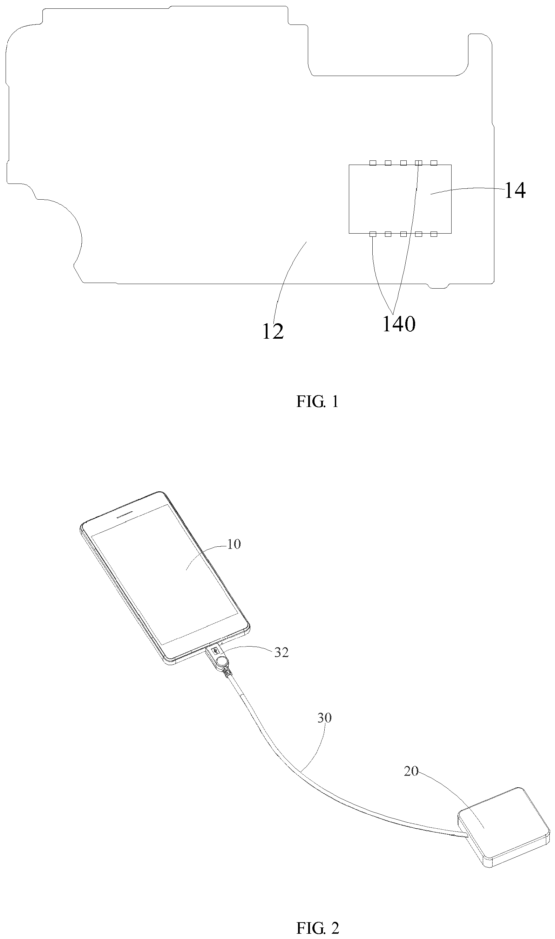

Referring to FIGs. 1 and 2, the mobile terminal 10 of the present disclosure may include a main board 12 and a virtual SIM card chip 14. The virtual SIM card chip 14 may be attached on and electrically connected to the main board 12. Since the virtual SIM card chip 14 is attached on and electrically connected to the main board 12, the SIM card function may be achieved without usage of card socket or card tray. Thus, the integrity of the mobile terminal 10 may be improved, problems such as water leakage due to the arrangement of card tray hole may be avoided, and the problem that the SIM card cannot be identified because of the poor connection of the clip in the card socket or the card tray may be avoided. Furthermore, the implementation of the present disclosure may reduce the arrangement area required on the board of the mobile terminal 10, thereby increasing productivity and quality of the mobile terminal 10.

It should be understood, the virtual SIM card chip 14 may be an integrated circuit chip in which SIM card information may be wrote and stored.

Referring to FIGs. 1 and 2, in some embodiments, the virtual SIM card chip 14 may include multiple pins 140 for data transmission. The main board 12 may include multiple pads (not shown) corresponding and connected to the pins 140. Thus, the virtual SIM card chip 14 may be electrically connected to the main board 12 by connecting the pins 140 of the virtual SIM card chip with the pads of the main board 12. In some embodiments, the pads may be reserved for the pins 14 of the virtual SIM card chip 14 during circuit design, and may be exposed on the main board 12. The pads may be made of cooper or other conductive material.

In this embodiment, solder paste may be pasted on the pads of the main board 12 for attaching the virtual SIM card chip 14 on the main board 12, and then an equipment with surface mount technology (SMT) may be utilized to connect the pins 140 of the virtual SIM card chip 14 with the pads, such that the virtual SIM card chip 14 may be electrically connected with the main board 12.

Referring to FIGs. 1 and 2, the present disclosure also provides a system for realizing a virtual SIM card. The system may include a mobile terminal 10, a card reader 20 connected to the mobile terminal 10 and an external SIM card.

The mobile terminal 10 may include a main board 12 and a virtual SIM card chip 14. The virtual SIM card chip 14 may be attached on and electrically connected to the main board 12.

The card reader 20 may be coupled with the mobile terminal 10.

The external SIM card (not shown) may be plugged into the card reader 20, and it stores SIM card information. The mobile terminal 10 may configured to identify the SIM card information of the external SIM card, and copy the SIM card information to the virtual SIM card chip 14.

Since the virtual SIM card chip 14 is attached on and electrically connected to the main board 12, the SIM card function may be achieved without usage of card socket or card tray. Thus, the integrity of the mobile terminal 10 may be improved, problems such as water leakage due to the arrangement of card tray hole may be avoided, and the problem that the SIM card cannot be identified because of the poor connection of the clip in the card socket or the card tray may be avoided. Furthermore, the implementation of the present disclosure may reduce the arrangement area required on the board of the mobile terminal 10, thereby increasing productivity and quality of the mobile terminal 10. Moreover, the card reader 20 may be coupled with the mobile terminal 10 such that the SIM card information of the external SIM card plugged in the card reader 20 may be copied to the virtual SIM card chip 14. Thus, the virtual SIM card chip 14 may achieve the same function as the external SIM card. Thus, one-to-one correspondence between data of the mobile terminal 10 and the external SIM card may be established. Therefore, communication function or standby function of the mobile terminal 10 may be achieved through the virtual SIM card chip.

In this embodiment, the SIM card information may include data of the network operator, integrated circuit card identity (ICCID), international mobile subscriber identification number (IMSI), key identifier (KI), short message service platform (SMSP), card number, card name, phone number corresponding to the SIM card and short messages.

When the SIM card information is copied to the virtual SIM card chip 14, the above-listed information may be all copied to the virtual SIM card chip 14.

Referring to FIGs. 1 and 2, the virtual SIM card chip 14 may further include multiple pins 140 for data transmission. The main board 12 may include multiple pads (not shown) corresponding and connected to the pins 140. Thus, the virtual SIM card chip 14 may be electrically connected to the main board 12 by connecting the pins 140 of the virtual SIM card chip with the pads of the main board 12. In some embodiments, the pads may be reserved for the pins 14 of the virtual SIM card chip 14 during circuit design, and may be exposed on the main board 12. The pads may be made of cooper or other conductive material.

In this embodiment, solder paste may be pasted on the pads of the main board 12 for attaching the virtual SIM card chip 14 on the main board, and then an equipment with surface mount technology (SMT) may be utilized to connect the pins 140 of the virtual SIM card chip 14 with the pads, such that the virtual SIM card chip 14 may be electrically connected with the main board 12.

Referring to FIGs. 1 and 2, the system for realizing the virtual SIM card may further include a data cable 30 coupled between the card reader 20 and the mobile terminal 10. The data cable 30 may be utilized to connect the card reader 20 and the mobile terminal 10 such that the SIM card information may be copied to the virtual SIM card chip 14. By using the data cable 30, the transmission is not limited by network, and the SIM card information is not probably revealed. Thus, the connection is better secured, and is simple to set up.

In other embodiment, a wireless transmission method may alternatively be adopted between the card reader 20 and the mobile terminal 10 so as for copying the SIM card information of the external SIM card to the virtual SIM card chip 14. The wireless transmission method may correspond to Bluetooth, WiFi or Zigbee, which is not limited in the present disclosure.

Referring to FIGs. 1 and 2, the mobile terminal 10 may further include a universal serial bus (USB) interface (not shown). The data cable 30 may include a USB plug 32 which is plugged in the USB interface for coupling the card reader 20 and the mobile terminal 10. By connecting the USB plug 32 and the USB interface, the card reader 20 may be coupled with the mobile terminal 10, such that the SIM card information of the external SIM card may be copied to the virtual SIM card chip 14.

When the user uses the data cable 30 to copy the SIM card information, the external SIM card may be inserted in the card reader, and the USB plug 32 of the data cable 30 may be connected with the USB interface of the mobile terminal 10. Then, mobile terminal 10 may automatically identify signals from the USB interface and the card reader 20, and run the driving program 'SimMaster' so as to achieve the reading operation based on procedure.

After the above operation, the mobile terminal 10 may be rebooted. When the network operator information such as China Mobile, China Unicom, China Telecom or operators of other regions is displayed in the user interface, the SIM card information of the external SIM card may be found in the mobile terminal. In other words, the virtual SIM card chip may function as a functional block which inherits all information of the external SIM card.

The present disclosure provides a method for implementing a virtual SIM card. The method includes:
controlling a card reader by a mobile terminal to read SIM card information of an external SIM card;
copying the SIM card information to a virtual SIM card chip arranged inside the mobile terminal;
reading the SIM card information from the virtual SIM card chip and proceeding initialization.

In one embodiment, the step of reading the SIM card information from the virtual SIM card chip and proceeding initialization includes:
automatically identifying the copied SIM card information read from the virtual SIM card chip, running a driving program and generating guiding indication.

In one embodiment, the step of copying the SIM card information to a virtual SIM card chip arranged inside the mobile terminal comprises:
detecting whether there exists an idle data storage module among data storage modules of the virtual SIM card chip;
when it is detected that there exists the idle data storage module, copying the SIM card information to the idle data storage module of the virtual SIM card chip.

In one embodiment, the SIM card information includes data of the network operator, integrated circuit card identity (ICCID), international mobile subscriber identification number (IMSI), key identifier (KI), short message service platform (SMSP), card number, card name, phone number corresponding to the SIM card and short messages.

In one embodiment, the step of detecting whether there exists an idle data storage module among data storage modules of the virtual SIM card chip includes:
when it is detected that there does not exist the idle data storage module, outputting a describing information and an indicating information, wherein the describing information describes data information stored in each of the data storage modules of the virtual SIM card chip, and the indicating information indicates a user to select one of the data storage modules to store the SIM card information;
based on selection made by the user, empting existing SIM card information in the selected data storage module; and
copying the SIM card information to the selected data storage module.

Referring to FIGs. 1 to 3, the method for realizing a virtual SIM card of the present disclosure may include the following operations.

The mobile terminal 10 may control the card reader 20 to acquire the SIM card information of an external SIM card, and to copy the SIM card information to a virtual SIM card chip 14 of the mobile terminal 10.

The mobile terminal 10 may read the SIM card information stored in the virtual SIM card chip 14, and proceed initialization.

According to the present disclosure, the mobile terminal 10 may control the card reader 20 to acquire the SIM card information of the external SIM card, and to copy the SIM card information to the virtual SIM card chip 14. Then the virtual SIM card chip 14 may read the copied SIM card information and proceed initialization after the mobile terminal is rebooted. Thus, the virtual SIM card chip 14 may inherit all the SIM card information of the external SIM card, such as the card number and the like.

In some embodiment, a data cable 30 may be coupled between the card reader 20 and the mobile terminal 10. For copying the SIM card information to the virtual SIM card chip 14, the data cable 30 may be utilized to connect the card reader 20 with the mobile terminal 10. By using the data cable 30, the transmission is not limited by network, and the SIM card information is not probably revealed. Thus, the connection is better secured, and is simple to set up.

Referring to FIGs. 1 and 2, in some embodiments, the operation of copying the SIM card information of the external SIM card to the virtual SIM card chip 14 of the mobile terminal may include:
detecting whether there exists an idle data storage module among data storage modules of the virtual SIM card chip 14; and
when it is detected that there exists the idle data storage module, copying the SIM card information to the idle data storage module of the virtual SIM card chip.

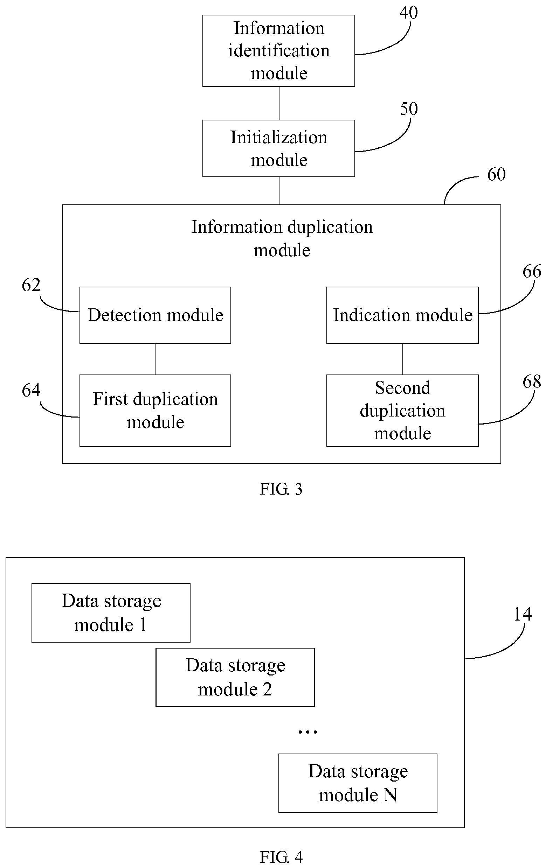

In this embodiment, the virtual SIM card chip 14 may be divided into multiple data storage modules, e.g., the data storage module 1, the data storage module 2...the data storage module N (N refers to a natural number greater than 0), as shown in FIG. 4. By detecting whether some of the data storage modules of the virtual SIM card chip 14 are in an idle state, and copying the SIM card information to the idle data storage module during the duplication process, SIM card information related to SIM cards of different network operators may be stored in one virtual SIM card chip 14, or SIM card information related to different SIM cards of one network operator may be stored in one virtual SIM card chip 14. Therefore, the virtual SIM card chip 14 may realize the so-called single-card-multi-standby function.

It should be understood, when the external SIM card is inserted in the card reader 20, the mobile terminal 10 may control the card reader to identify the SIM card information of the external SIM card, and to detect whether some of the data storage modules of the virtual SIM card chip 14 are in the idle state. If there exists at least one idle data storage module, the SIM card information may be copied to and stored in the idle data storage module.

In some embodiments, the step of detecting whether there exists an idle data storage module among the data storage modules of the virtual SIM card chip 14 may further include:
outputting a describing information and an indicating information when it is detected that there does not exist the idle data storage module, where the describing information describes data information stored in each of the data storage modules of the virtual SIM card chip, and the indicating information indicates the user to select one of the data storage modules to store the SIM card information; and
emptying existing SIM card information in the selected data storage module based on selection made by the user, and copying the SIM card information to the selected data storage module.

The user may select the data storage module for storing the SIM card information based on the indicating information so as to copy the SIM card information to the selected data storage module. Thus, the data storage modules may be reused, which may increase the usage ratio of the virtual SIM card.

The present disclosure provides an apparatus for realizing a virtual SIM card. The apparatus includes: an information identification module, configured to control a card reader to acquire SIM card information of an external SIM card; an information duplication module, configured to copy the SIM card information to a virtual SIM card chip arranged in a mobile terminal; and an initialization module, configured to reboot the mobile terminal, read the SIM card information from the virtual SIM card chip and proceed initialization.

In one embodiment, the initialization module is configured to automatically identify the copied SIM card information read from the virtual SIM card chip, run a driving program and generate guiding indication.

In one embodiment, the information duplication module includes: a detection module, configured to detect whether there exists an idle data storage module among data storage modules of the virtual SIM card chip; and a first duplication module, configured to copy the SIM card information to the virtual SIM card chip when it is detected that there exists the idle data storage module.

In one embodiment, the information duplication module further includes: an indication module, configured to output a describing information and an indicating information when it is detected that there does not exist the idle data storage module, wherein the describing information describes data information stored in each of the data storage modules of the virtual SIM card chip, and the indicating information indicates a user to select one of the data storage modules to store the SIM card information; and a second duplication module, configured to empty existing SIM card information in the selected data storage module based on selection made by the user, and copy the SIM card information to the selected data storage module.

Referring to FIGs. 2 and 3, the apparatus for realizing a virtual SIM card of the present disclosure may include an information identification module 40, an information duplication module 60 and an initialization module 50.

The information identification module 40 may be utilized to control the card reader 20 to acquire SIM card information of the external SIM card.

The information duplication module 60 may be utilized to copy the SIM card information to the virtual SIM card chip 14 of the mobile terminal 10.

The initialization module 50 may be utilized to reboot the mobile terminal 10, read the copied SIM card information from the virtual SIM card chip 14 and proceed initialization.

According to the present disclosure, the information identification module 40 may be utilized to control the card reader to acquire SIM card information of the external SIM card. The information duplication module 60 may be utilized to copy the SIM card information to the virtual SIM card chip 14. The initialization module 50 may be utilized to read the copied SIM card information from the virtual SIM card chip 14 and proceed initialization after the mobile terminal 10 is rebooted. Therefore, the virtual SIM card chip 14 may inherit all the SIM card information of the external SIM card such as card number.

In some embodiments, a data cable 30 may be electrically connected between the card reader 20 and the mobile terminal 10. For copying the SIM card information to the virtual SIM card chip 14, the data cable 30 may be utilized to connect the card reader 20 with the mobile terminal. By using the data cable 30, the transmission is not limited by network, and the SIM card information is not probably revealed. Thus, the connection is better secured, and is simple to set up.

Referring to FIGs. 2 and 3, the information duplication module 60 may further include a detection module 62 and a first duplication module 64.

The detection module 62 may be utilized to detect whether there exists an idle data storage module among data storage modules of the virtual SIM card chip 14.

The first duplication module 64 may be utilized to copy the SIM card information to the idle data storage module of the virtual SIM card chip 14 when the detection module 62 detects that there exists the idle data storage module.

In this embodiment, the virtual SIM card chip 14 may be divided into multiple data storage modules. The detection module 62 may be utilized to detect whether there exists an idle data storage module among data storage modules of the virtual SIM card chip 14. When it is detected that there exist the idle data storage module, the first duplication module 64 may be utilized to copy the SIM card information to the idle data storage module. By using the first duplication module 64 to copy the SIM card information to the idle data storage module, SIM card information related to SIM cards of different network operators may be stored in one virtual SIM card chip 14, or SIM card information related to different SIM cards of one network operator may be stored in one virtual SIM card chip 14. Therefore, the virtual SIM card chip 14 may realize the so-called single-card-multi-standby function.

It should be understood that, when the external SIM card is inserted in the card reader 20, the mobile terminal 10 may control the card reader to identify the SIM card information of the external SIM card. The detection module 62 may be utilized to detect whether there exist an idle data storage module among data storage modules of the virtual SIM card chip 14. When it is detected that there exists the idle data storage module, the first duplication module 64 may be utilized to copy the SIM card information to the idle data storage module.

Referring to FIGs. 2 and 3, the information duplication module 60 may further include an indication module 66 and a second duplication module 68.

The indication module 66 may be utilized to output a describing information and an indicating information when the detection module 62 detects that there does not exist the idle data storage module. The describing information describes data information stored in each of the data storage modules, and the indicating information indicates the user to select one of the data storage modules to store the SIM card information.

The second duplication module 68 may be utilized to empty existing SIM card information in the selected data storage module based on selection made by the user, and copy the SIM card information to the selected data storage module.

The user may select the data storage module for storing the SIM card information based on indicating information provided by the indication module 66. Then the second duplication module 68 may be utilized to copy the SIM card information to the selected data storage module. Thus, the data storage modules may be reused, and the usage ratio of the virtual SIM card may be increased.

The foregoing is merely some embodiments of the present disclosure, and is not intended to limit the scope of the present disclosure. The variation or modification made to any of the embodiments of the present disclosure by those of ordinary skill in the art should also be considered within the scope of the present disclosure.

## Claims

1. A mobile terminal (10), comprising a main board (12) and **characterized by**
further comprising a virtual subscriber identification module (SIM) card chip (14) attached on the main board (12) and electrically connected to the main board (12) without usage of a card socket or a card tray; wherein the virtual SIM card chip is configured to store SIM card information copied from an external SIM card disposed out of the mobile terminal, so that the mobile terminal achieves communication and standby functions through the virtual SIM card chip; wherein the virtual SIM card chip (14) is an integrated circuit chip.

2. The mobile terminal (10) of claim 1, wherein the virtual SIM card chip (14) comprises a plurality of pins (140) for data transmission; the main board (12) comprises a plurality of pads corresponding to and connected with the plurality of pins (140).

3. The mobile terminal (10) of claim 2, wherein the plurality of pads are made of copper

4. The mobile terminal (10) of claim 2, wherein solder paste is arranged on the plurality of pads.

5. The mobile terminal (10) of claim 4, wherein the virtual SIM card chip (14) comprises a plurality of data storage modules capable of storing SIM card information of different external SIM cards.

6. A system with the mobile terminal (10) of any one of claims 1-5, further comprising:
a card reader (20) coupled with the mobile terminal and disposed out of the mobile terminal (10); and
an external SIM card inserted in the card reader (20) and storing SIM card information, wherein the mobile terminal (10) is configured to identify the SIM card information stored in the external SIM card and to copy the SIM card information to the virtual SIM card chip (14).

7. The system of claim 6, further comprising: a data cable (30) coupled between the card reader (20) and the mobile terminal (10).

8. The system of claim 6, wherein the mobile terminal (10) is configured to communicate with the card reader (20) with wireless network signals.

9. The system of claim 7, wherein the mobile terminal (10) comprises a universal serial bus (USB) interface; the data cable (30) comprises a USB plug (32) which is plugged in the USB interface for coupling the card reader (20) with the mobile terminal (10).

10. A method for realizing a virtual subscriber identification module (SIM) card, **characterized by**, comprising:
controlling a card reader (20) by a mobile terminal (10) to read SIM card information of an external SIM card, wherein the card reader and the external SIM card are disposed out of the mobile terminal;
wherein, the mobile terminal (10) comprises a main board (12) and a virtual SIM card chip (14) attached on the main board (12) and electrically connected to the main board (12) without usage of a card socket or a card tray, and the virtual SIM card chip (14) is an integrated circuit chip;
copying the SIM card information to the virtual SIM card chip (14) arranged inside the mobile terminal (10);
reading the SIM card information from the virtual SIM card chip (14) and proceeding initialization.

11. The method of claim 10, wherein the reading the SIM card information from the virtual SIM card chip (14) and proceeding initialization comprises:
automatically identifying the copied SIM card information read from the virtual SIM card chip (14);
running a driving program; and
generating guiding indication.

12. The method of claim 10, wherein the copying the SIM card information to the virtual SIM card chip (14) arranged inside the mobile terminal (10) comprises:
detecting whether there exists an idle data storage module among data storage modules of the virtual SIM card chip (14);
when it is detected that there exists the idle data storage module, copying the SIM card information to the idle data storage module of the virtual SIM card chip (14).

13. The method of claim 10, wherein the SIM card information includes data of a network operator, integrated circuit card identity (ICCID), international mobile subscriber identification number (IMSI), key identifier (KI), short message service platform (SMSP), card number, card name, phone number corresponding to the SIM card and short messages.

14. The method of claim 12, wherein the detecting whether there exists the idle data storage module among the data storage modules of the virtual SIM card chip (14) comprises:
when it is detected that there does not exist the idle data storage module, outputting a describing information and an indicating information, wherein the describing information describes data information stored in each of the data storage modules of the virtual SIM card chip (14), and the indicating information indicates a user to select one of the data storage modules to store the SIM card information;
based on selection made by the user, empting existing SIM card information in the selected data storage module; and
copying the SIM card information to the selected data storage module.

## Patentansprüche

1. Mobiles Endgerät (10), umfassend eine Hauptplatine (12) und **gekennzeichnet durch**
weiter umfassend einen Virtuelle-Teilnehmeridentitätsmodul(SIM)-Kartenchip (14), angebracht auf der Hauptplatine (12) und elektrisch verbunden mit der Hauptplatine (12) ohne Nutzung eines Kartenslots oder eines Kartenhalters; wobei der Virtuelle-SIM-Kartenchip konfiguriert ist zum Speichern von SIM-Karteninformationen kopiert von einer externen SIM-Karte angeordnet außerhalb des mobilen Endgeräts, so dass das mobile Endgerät Kommunikations- und Standby-Funktionen durch den Virtuelle-SIM-Kartenchip erzielt; wobei der Virtuelle-SIM-Kartenchip (14) ein integrierter Schaltungschip ist.

2. Mobiles Endgerät (10) nach Anspruch 1, wobei der Virtuelle-SIM-Kartenchip (14) mehrere Pins (140) zur Datenübertragung umfasst; die Hauptplatine (12) mehrere Pads entsprechend und verbunden mit den mehreren Pins (140) umfasst.

3. Mobiles Endgerät (10) nach Anspruch 2, wobei die mehreren Pads aus Kupfer hergestellt sind.

4. Mobiles Endgerät (10) nach Anspruch 2, wobei Lötpaste auf den mehreren Pads angeordnet ist.

5. Mobiles Endgerät (10) nach Anspruch 4, wobei der Virtuelle-SIM-Kartenchip (14) mehrere Datenspeichermodule umfasst, die in der Lage sind, SIM-Karteninformationen von verschiedenen externen SIM-Karten zu speichern.

6. System mit dem mobilen Endgerät (10) nach einem der Ansprüche 1-5, weiter umfassend:
ein Kartenlesegerät (20), gekoppelt mit dem mobilen Endgerät und angeordnet außerhalb des mobilen Endgeräts (10); und
eine externe SIM-Karte, in das Kartenlesegerät (20) eingeführt und SIM-Karteninformationen speichernd, wobei das mobile Endgerät (10) konfiguriert ist zum Identifizieren der in der externen SIM-Karte gespeicherten SIM-Karteninformationen und Kopieren der SIM-Karteninformationen auf den Virtuelle-SIM-Kartenchip (14).

7. System nach Anspruch 6, weiter umfassend: ein Datenkabel (30), das zwischen das Kartenlesegerät (20) und das mobile Endgerät (10) gekoppelt ist.

8. System nach Anspruch 6, wobei das mobile Endgerät (10) konfiguriert ist zum Kommunizieren mit dem Kartenlesegerät (20) mit Drahtlosnetzwerksignalen.

9. System nach Anspruch 7,
wobei das mobile Endgerät (10) eine USB(Universal Serial Bus)-Schnittstelle umfasst; das Datenkabel (30) einen USB-Stecker (32) umfasst, der in die USB-Schnittstelle gesteckt ist, um das Kartenlesegerät (20) mit dem mobilen Endgerät (10) zu koppeln.

10. Verfahren zum Realisieren einer Virtuelle-Teilnehmeridentifikationsmodul(SIM)-Karte, **gekennzeichnet durch** umfassend:
Steuern eines Kartenlesegeräts (20) durch ein mobiles Endgerät (10) zum Lesen von SIM-Karteninformationen einer externen SIM-Karte, wobei das Kartenlesegerät und die externe SIM-Karte außerhalb des mobilen Endgeräts angeordnet sind;
wobei das mobile Endgerät (10) eine Hauptplatine (12) und einen Virtuelle-SIM-Kartenchip (14), angebracht auf der Hauptplatine (12) und elektrisch mit der Hauptplatine (12) verbunden ohne Nutzung eines Kartenslots oder eines Kartenhalters, und der Virtuelle-SIM-Kartenchip (14) ein integrierter Schaltungschip ist;
Kopieren der SIM-Karteninformationen auf den virtuellen SIM-Kartenchip (14) angeordnet innerhalb des mobilen Endgeräts (10);
Lesen der SIM-Karteninformationen von dem virtuellen SIM-Kartenchip (14) und Durchführen einer Initialisierung.

11. Verfahren nach Anspruch 10,
wobei das Lesen der SIM-Karteninformationen von dem virtuellen SIM-Kartenchip (14) und Durchführen einer Initialisierung umfasst:
automatisches Identifizieren der von dem virtuellen SIM-Kartenchip (14) gelesenen kopierten SIM-Karteninformationen;
Ausführen eines Ansteuerprogramms; und
Generieren einer Anleitungsanzeige.

12. Verfahren nach Anspruch 10,
wobei das Kopieren der SIM-Karteninformationen zu dem innerhalb des mobilen Endgeräts (10) angeordneten virtuellen SIM-Kartenchip (14) umfasst:
Detektieren, ob unter Datenspeichermodulen des virtuellen SIM-Kartenchips (14) ein freies Datenspeichermodul existiert;
wenn detektiert wird, dass das freie Datenspeichermodul existiert, Kopieren der SIM-Karteninformationen zu dem freien Datenspeichermodul des virtuellen SIM-Kartenchips (14).

13. Verfahren nach Anspruch 10,
wobei die SIM-Karteninformationen Daten enthalten eines Netzwerkbetreibers, ICCID (Integrated Circuit Card Identity), IMSI (International Mobile Subscriber Identification Number), KI (Key Identifier), SMSP (Short Message Service Platform), Kartennummer, Kartenname, Telefonnummer entsprechend der SIM-Karte und kurze Nachrichten.

14. Verfahren nach Anspruch 12,
wobei das Detektieren, ob unter den Datenspeichermodulen des virtuellen SIM-Kartenchips (14) das freie Datenspeichermodul existiert, umfasst:
wenn detektiert wird, dass das freie Datenspeichermodul nicht existiert, Ausgeben einer beschreibenden Information und einer anzeigenden Information, wobei die beschreibende Information in jedem der Datenspeichermodule des virtuellen SIM-Kartenchips (14) gespeicherte Dateninformationen beschreibt und die anzeigenden Informationen einen Benutzer anzeigen zum Wählen eines der Datenspeichermodule zum Speichern der SIM-Karteninformationen;
auf Basis einer durch den Benutzer vorgenommenen Wahl, Leeren existierender SIM-Karteninformationen in dem gewählten Datenspeichermodul; und
Kopieren der SIM-Karteninformationen zu dem gewählten Datenspeichermodul.

## Revendications

1. Terminal mobile (10), comprenant une carte principale (12) et **caractérisé en ce qu'**il comprend en outre une puce de carte de module d'identification d'abonné (SIM) virtuelle (14) attachée à la carte principale (12) et connectée électriquement à la carte principale (12) sans recourir à une fiche de carte ou un bac à cartes ; la puce de carte SIM virtuelle étant configurée pour stocker des informations de carte SIM copiées à partir d'une carte SIM externe disposée hors du terminal mobile, de telle sorte que le terminal mobile réalise des fonctions de communication et de veille par le biais de la puce de carte SIM virtuelle ; la puce de carte SIM virtuelle (14) étant une puce à circuit intégré.

2. Terminal mobile (10) selon la revendication l, dans lequel la puce de carte SIM virtuelle (14) comprend une pluralité de broches (140) pour la transmission de données ; la carte principale (12) comprend une pluralité de plots correspondant et connectée à la pluralité de broches (140).

3. Terminal mobile (10) selon la revendication 2, dans lequel la pluralité de plots est réalisée en cuivre.

4. Terminal mobile (10) selon la revendication 2, dans lequel de la pâte à braser est disposée sur la pluralité de plots.

5. Terminal mobile (10) selon la revendication 4, dans lequel la puce de carte SIM virtuelle (14) comprend une pluralité de modules de stockage de données capables de stocker des informations de carte SIM de différentes cartes SIM externes.

6. Système doté du terminal mobile (10) selon l'une quelconque des revendications 1 à 5, comprenant en outre :
un lecteur de carte (20) couplé au terminal mobile (10) et disposé hors du terminal mobile (10) ; et
une carte SIM externe insérée dans le lecteur de carte (20) et stockant des informations de carte SIM, le terminal mobile (10) étant configuré pour identifier les informations de carte SIM stockées dans la carte SIM externe et copier les informations de carte SIM sur la puce de carte SIM virtuelle (14).

7. Système selon la revendication 6, comprenant en outre : un câble de données (30) couplé entre le lecteur de carte (20) et le terminal mobile (10).

8. Système selon la revendication 6, dans lequel le terminal mobile (10) est configuré pour communiquer avec le lecteur de carte (20) à l'aide de signaux de réseau sans fil.

9. Système selon la revendication 7, dans lequel le terminal mobile (10) comprend une interface de bus série universelle (USB) ; le câble de données (30) comprend une fiche USB (32) qui est enfichée dans l'interface USB pour coupler le lecteur de carte (20) au terminal mobile (10).

10. Procédé de réalisation d'une carte de module d'identification d'abonné (SIM) virtuelle, **caractérisé en ce qu'**il comprend :
la commande d'un lecteur de carte (20) par un terminal mobile (10) pour lire des informations de carte SIM d'une carte SIM externe, le lecteur de carte et la carte SIM externe étant disposés hors du terminal mobile ;
dans lequel, le terminal mobile (10) comprend une carte principale (12) et une puce de carte SIM virtuelle (14) attachée à la carte principale (12) et connectée électriquement à la carte principale (12) sans recourir à une prise de carte ou un bac à cartes, et la puce de carte SIM virtuelle (14) étant une puce à circuit intégré ;
la copie des informations de carte SIM sur la puce de carte SIM virtuelle (14) disposée à l'intérieur du terminal mobile (10) ;
la lecture des informations de carte SIM à partir de la puce de carte SIM virtuelle (14) et le déclenchement d'une initialisation.

11. Procédé selon la revendication 10, dans lequel la lecture des informations de carte SIM à partir de la puce de carte SIM virtuelle (14) et le déclenchement d'une initialisation comprennent :
l'identification automatique des informations de carte SIM copiées lues à partir de la puce de carte SIM virtuelle (14) ;
l'exécution d'un programme d'entraînement ; et
la génération d'une indication de guidage.

12. Procédé selon la revendication 10, dans lequel la copie des informations de carte SIM sur la puce de carte SIM virtuelle (14) disposée à l'intérieur du terminal mobile (10) comprend :
la détection qu'il existe ou non un module de stockage de données inactif parmi des modules de stockage de données de la puce de carte SIM virtuelle (14) ;
quand il est détecté que le module de stockage de données inactif existe, la copie des informations de carte SIM dans le module de stockage de données inactif de la puce de carte SIM virtuelle (14).

13. Procédé selon la revendication 10, dans lequel les informations de carte SIM comportent des données d'un opérateur de réseau, une identité de carte de circuit intégré (ICCID), un numéro d'identification d'abonné mobile international (IMSI), un identifiant clé (KI), une plate-forme de services pour messages courts (SMSP), un numéro de carte, un nom de carte, un numéro de téléphone correspondant à la carte SIM et des messages courts.

14. Procédé selon la revendication 12, dans lequel la détection que le module de stockage de données inactif existe ou non parmi les modules de stockage de données de la puce de carte SIM virtuelle (14) comprend :
quand il est détecté que le module de stockage de données inactif n'existe pas, la délivrance d'informations de description et d'informations d'indication, les informations de description décrivant des informations de données stockées dans chacun des modules de stockage de données de la puce de carte SIM virtuelle (14), et les informations d'indication indiquant un utilisateur pour sélectionner un des modules de stockage de données pour stocker les informations de carte SIM ;
en fonction de la sélection réalisée par l'utilisateur, la purge d'informations de carte SIM existantes dans le module de stockage de données sélectionné ; et
la copie des informations de carte SIM dans le module de stockage de données sélectionné.
